(19) Europäisches Patentamt

European Patent Office

Office européen des brevets

(11) **EP 3 614 645 B1**

(12) **EUROPEAN PATENT SPECIFICATION**

(45) Date of publication and mention
of the grant of the patent:
**23.11.2022 Bulletin 2022/47**

(21) Application number: **19192412.5**

(22) Date of filing: **19.08.2019**

(51) International Patent Classification (IPC):
**H04L 9/40** *(2022.01)* **G06K 9/62** *(2022.01)*
**G06K 9/00** *(2022.01)* **G06N 3/04** *(2006.01)*
**G06N 3/08** *(2006.01)*

(52) Cooperative Patent Classification (CPC):
**G06K 9/00523; G06K 9/00536; G06K 9/6223;
G06K 9/627; G06N 3/0445; G06N 3/0454;
G06N 3/08; H04L 63/1408; H04L 63/1441;
H04L 2463/144**

(54) **EMBEDDED DGA REPRESENTATIONS FOR BOTNET ANALYSIS**

EINGEBETTETE DGA-DARSTELLUNGEN ZUR BOTNET-ANALYSE

REPRÉSENTATIONS DGA INTÉGRÉES POUR ANALYSE DE ZOMBIES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.08.2018 US 201862720219 P**

(43) Date of publication of application:
**26.02.2020 Bulletin 2020/09**

(73) Proprietor: **Deutsche Telekom AG
53113 Bonn (DE)**

(72) Inventors:
• **SIDI, Lior
6215505 Tel Aviv (IL)**
• **SHABTAI, Asaf
7684200 Hulda (IL)**
• **BRODT, Oleg
8471621 Beer Sheva (IL)**
• **MIRSKY, Yisroel
8470915 Beer Sheva (IL)**
• **ELOVICI, Yuval
7986400 Arugot (IL)**
• **MIMRAN, David
6215505 Tel Aviv (IL)**

(74) Representative: **Graf von Stosch
Patentanwaltsgesellschaft mbH
Prinzregentenstraße 22
80538 München (DE)**

(56) References cited:
• **MANOS ANTONAKAKIS ET AL: "From
Throw-Away Traffic to Bots: Detecting the Rise
of DGA-Based Malware", USENIX, USENIX, THE
ADVANCED COMPUTING SYSTEMS
ASSOCIATION, 11 April 2013 (2013-04-11), pages
1-16, XP061014403, [retrieved on 2013-04-11]**
• **YIZHENG CHEN ET AL: "Practical Attacks
Against Graph-based Clustering", ARXIV.ORG,
CORNELL UNIVERSITY LIBRARY, 201 OLIN
LIBRARY CORNELL UNIVERSITY ITHACA, NY
14853, 30 August 2017 (2017-08-30),
XP080955119, DOI: 10.1145/3133956.3134083**
• **HYRUM S ANDERSON ET AL: "DeepDGA",
ARTIFICIAL INTELLIGENCE AND SECURITY,
ACM, 2 PENN PLAZA, SUITE 701 NEW YORK NY
10121-0701 USA, 28 October 2016 (2016-10-28),
pages 13-21, XP058300460, DOI:
10.1145/2996758.2996767 ISBN:
978-1-4503-4573-6**
• **MOHAN VYSAKH S ET AL: "S.P.O.O.F Net:
Syntactic Patterns for identification of Ominous
Online Factors", 2018 IEEE SECURITY AND
PRIVACY WORKSHOPS (SPW), IEEE, 24 May
2018 (2018-05-24), pages 258-263, XP033379512,
DOI: 10.1109/SPW.2018.00041 [retrieved on
2018-08-02]**

**Description**

**Field of the Invention**

The present invention relates to the field of cyber security. More particularly, the invention relates to a method and system for analyzing and clustering botnets and Domain Generation Algorithms (DGAs) with embedded DGA representations.

**Background of the Invention**

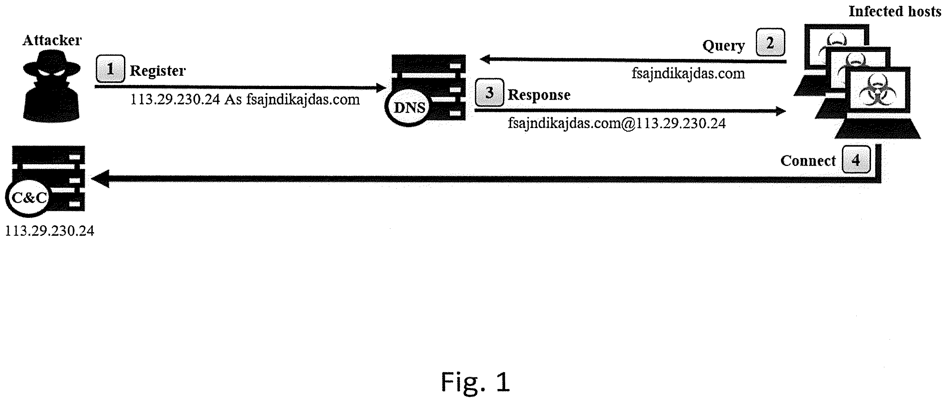

A botnet is a network of compromised computers (bots - a bot is a program that operates as an agent for a user or another program or simulates a human activity) which can virtually be any Internet connected device. A botnet is used to launch distributed denial of service (DDoS) attacks [15], perform espionage [14], steal user credentials [9], and even mine cryptocurrencies [12]. Botnets cause massive damage to governments, companies and private users. Moreover, their traffic can cause massive disruptions in Internet infrastructure of a country. In order to send commands and receive data from the bots, a command and control (C&C) web server is setup somewhere in the Internet. Botnets are commonly directed to their C&C via the Domain Name Servers (DNS). By querying a DNS with a domain name, one can retrieve the domain's associated IP address. For example, the domain name google.com can be used to retrieve the current IP address of Google's web servers. As illustrated in Fig. 1, an attacker can use the DNS system to connect his botnet with flexibility (i.e., no hard coded IP address).

A challenge which attackers face is that Internet Service Providers (ISP) can identify C&C domain names by observing trends and traffic rates [3]. When a C&C domain name has been identified, the ISP can disable the botnet by blacklisting the domain name. Furthermore, by tracking the bots' source IPs, it is possible to monitor the spreading level of the botnet, the affected countries, and types of devices. In order to avoid this single point of failure, botnet authors use Domain Generation Algorithms (DGA). A DGA is an algorithm which generates random, yet legitimate, domain names. A DGA works like a pseudo random number generator: given an initial seed value, the algorithm produces a sequence of deterministic outputs which seem random to the observer. All bots in a certain botnet will have the same DGA and initial seed.

When a bot first comes online, it uses the DGA and seed to generate its C&C's domain name. If the DNS notices the bot that domain is unavailable (e.g., blacklisted) then the seed is incremented and the next domain is checked. This can also be done periodically, to hide activities in what is referred to as fast-flux. Finally, an attacker registers the corresponding domain names in order to connect the bots to the attacker's C&C.

However, monitoring DNS requests is a "big data" problem for ISPs, since there are trillions of daily DNS requests. Furthermore, botnet creators started using DGAs which use dictionaries to obfuscate their legitimacy [25]. In order to detect generated domain names, machine learning techniques can be used [23, 31, 33]. However, an ISP cannot block all DGA domains because there are legitimate services which rely on DGAs, and also there are many legitimate domains which seem like they are from a DGA. For example, using the DGA classifier from [34], the domain zdmikp.bydgoszcz.pl is classified as being from a DGA. However, it is just a public transportation website from Poland. Another example is z5h64q92x9.net which is used by Yandex Mail. Therefore, there is need for a more intelligent process of analyzing detected DGA domain names. To analyze the domain names one can perform cluster analysis. For example, determine if a given generated domain belongs to a known malware's DGA, or if it belongs to a new family. Furthermore, with this representation, an analyst can determine if a given domain is legitimate by investigating other domains in the same cluster, or by determining that the domain is an outlier. To perform cluster analysis it is required to represent each example domain name as a feature vector. However, the only representations used for DGA domains are linguistic features, such as the entropy and character counts [24, 27, 30].

Using this kind of feature representation, is it difficult to separate between similar DGAs. For example, two DGAs which aim to generate strings with high entropy can have the same character distributions. However, by considering the sequence of characters in each example, and by using deep learning techniques, it will be possible to find representations of the example domains which reflect the DGAs that produce them. For example, the algorithmic aspects of how the sequence of characters are sequentially generated.

Many prior art works addressed DGA generated names. Some of them are:

**Feature Representation**

In machine learning, an observation (sample domain name) is represented as a feature vector before being passed to an algorithm. Previous works proposed three common ways for representing DGA-generated domain names as feature vectors: as linguistic features, linguistic & DNS features, and the character string itself.

**Linguistic features:** A linguistic feature vector captures the difference between a DGA-generated name or a natural language string. Some example features are the domain length [24], consonants vowels and digit ratios [27, 30], ratio of meaningful words [8, 38], and domain character entropy [22, 38]. Domain character entropy captures the randomness of the domain's characters and is a good indication whether the domain is a DGA or not. Let D be a given sample domain name, and let {D} denote the set of characters in D. The entropy feature is calculated by

$$S(D) = -\sum p_i \cdot \log p_i$$

where pi is the probability of the i-th character in the set {D} to appear in D.

**Linguistic & DNS Features:**

Some works propose fusing metadata from the DNS record with the domain name's linguistic features. For example, in [8], the authors examine the related IP addresses, country of origin, and the DNS time-to-live statistics. Although these features provide a useful context for the machine learning algorithm, acquiring these features may infringe on the users' privacy and incur a significant preprocessing overhead (e.g., IP resolutions and Whois lookups).
**Character String** Instead of summarizing a string as a feature vector, some works proposed using the character string itself.
In the case of artificial neural networks, each of the characters are represented as a one-hot-encoding. For example,
'a'=< 1, 0, 0, ... >, 'b'=< 0, 1, 0, ... >, and so on. A sequence of these encodings are inputted into the model according to the given sample domain name.
**Embedding** The present invention proposes a neural network to find a more meaningful representation than a one-hot-encoding. The general approach is to use a special neural network, called an autoencoder, to learn the concepts and relationships among each of the domains' characters. After learning these concepts, the autoencoder can produce feature vectors (embeddings) on new domain names. The embeddings capture the relationship which the given domain name has with respect to those seen during training.

**Machine Learning Applications**

To validate how meaningful the EDGAR's embeddings are, the task of clustering on the embeddings was performed. As a result, the present invention's work is also the first to perform cluster analysis on DGA domains for the purpose of (1) performing DGA family analysis, and (2) providing an informative tool for analysts to verify that a detected DGA is malicious or not (e.g., belonging to a foreign language). However, to understand the origin of the different feature representations, below there is a review of the most central machine learning works which deal with DGAs. In Table 1, there is a summary of the domain name representations used by these works for each of their applications. Previous DGA machine learning applications perform the task of classification. The task of classification is a supervised approach where (1) a domain expert labels a dataset (i.e., marks each domain as being DGA or not DGA), and (2) induces a model which can distinguish between the dataset's instances according to their labels. One of the first methods for representing and detecting malicious domain names was proposed in [4] and [8]. In these works, the authors detect botnet domain names by training decision tree classifiers with both linguistic and DNS features. In [5, 19, 26], the authors propose using deep learning to detect malicious domains.

**Table 1: Summary of Related Works**

| | Task | Domain Name Representation | | | |
| | | Linguistic | Linguistic & DNS | Character String | Embedding |
|---|---|---|---|---|---|
| | Malicious URL detection | Out of scope | [4, 8] | [5, 19, 26] | |
| **Target Application** | DGA Detection | [2, 22, 24] | [27, 30, 38] | [7, 33, 36] | |
| | DGA Family Detection | [23, 32] | | [23, 31, 33] | |
| | DGA Family Analysis | [24, 25] | | | [EDGAR] |

An advantage of this approach is that the networks learn the domain's representations directly for the character strings, without crafted linguistic features. The research papers mentioned above detect malicious URLs in general. In [2, 22, 24, 38], the authors attempt to detect DGA-generated names using linguistic and DNS features. In [7, 33, 36], the authors use deep learning techniques on the character strings for the same purpose. In [23, 32], the authors use linguistic features to build a classifier which can differentiate between DGA families. Their approach is to (1) use a classifier on domain names to select those created by a DGA, (2) obtain the family name (label) for each and every selected domain, (3) train a classifier on the labeled dataset, and then (4) use the classifier on all future domains which are detected as being from a DGA. In [23, 31, 33], the authors follow a similar approach using deep learning techniques. In [27, 30], the authors follow a semi-supervised approach where the DGA-generated domains are labeled using whitelists, blacklists, and statistical measures -before being passed to a classifier.

## Artificial Neural Networks

ANNs are made up of layers of neurons, where each layer is connected sequentially via synapses. The synapses have associated weights which collectively define the concepts learned by the model. Concretely, let $l^{(i)}$ denote the i-th layer in the ANN, and let $\| l^{(i)} \|$ denote the number of neurons in $l^{(i)}$. Finally, let the total number of layers in the ANN be denoted as L. The weights which connect $l^{(i)}$ to $l^{(i+1)}$ are denoted as the $\| l^{(i)} \|$-by-$\| l^{(i+1)} \|$ matrix $W^{(i)}$ and $\| l^{(i+1)} \|$ dimensional bias vector $\vec{b}^{(i)}$. Finally, we denote the collection of all parameters $\theta$ as the tuple $\theta \equiv (W, b)$, where $W$ and $b$ are the weights of each layer respectively. Figure 1 illustrates how the weights form the synapses of each layer in an ANN.

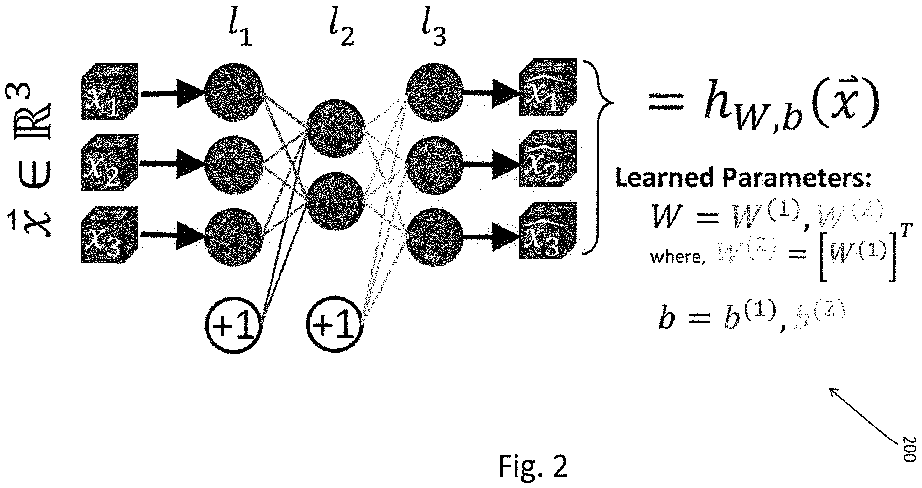

Fig. 2 illustrates how the weights form the synapses of each layer in an ANN. There are two kinds of layers in an ANN: visible layers and hidden layers. The visible layer receives the input instance $\vec{x}$ with an additional bias variable (a constant value of 1). $\vec{x}$ is a vector of numerical features which describes the instance, and is typically normalized to fall out approximately on the range of [-1, +1] (e.g., using 0-1 normalization or zscore normalization) [17]. The difference between the visible layer and the hidden layers is that the visible layer is considered to be precomputed, and ready to be passed to the second layer.

## Autoencoders

An autoencoder is an artificial neural network which is trained to reconstruct it's inputs (i.e., *X = Y*). Concretely, during training, an autoencoder tries to learn the function

$$h_\theta(\vec{x}) \approx \vec{x} \quad (2)$$

It can be seen that an autoencoder is essentially trying to learn the identity function of the original data distribution. Therefore, constraints are placed on the network, forcing it to learn more meaningful concepts and relationships between the features in $\vec{x}$. The most common constraint is to limit the number of neurons in the inner layers of the network. The narrow passage causes the network to learn compact encodings and decodings of the input instances.

As an example, Fig. 2 illustrates an autoencoder which receives an instance $\vec{x} \in 3$ at layer $l^{(1)}$, (2) **encodes** (compresses) $\vec{x}$ at layer $l^{(2)}$, and (3) **decodes** the compressed representation of $\vec{x}$ at layer $L^{(3)}$. If an autoencoder is symmetric in layer sizes, the same (mirrored) weights can be used for coding and decoding [16]. This trick reduces the number of calculations needed during training. For example, in Figure 1, $W^{(2)} = W^{(1)T}$.

A typical autoencoder cannot directly be used on a domain name (sequences of characters). There are two main reasons for this:

Nominality Neural networks naturally receive numerical values as inputs. However, characters are symbolic, and thus have no numerical representation. Therefore, there is a need for a representation step (representation layer) of the characters when a domain name is fed through the input layer.

**Locality** Within a string, there is a contextual relationship between neighboring characters. In order to model the recurring patterns, these relationships must be considered. However, due to their complexity, a fully connected neural network does not perform so well at learning these concepts.

Therefore, there is a need for an architecture which is designed to learn these concepts. There are several existing autoencoder architectures which consider the nominality and locality of strings. An EDGAR can be obtained from any one of these architectures.

## Embeddings from Autoencoders

An embedding is the compressed representation (encoding) of an autoencoder's input. Since an autoencoder attempts to humanizes the distribution, the embedding can captures meaningful patterns of the input data. An embedding of the input vector $\vec{x}$ is the vector $\vec{e}$ obtained from the inner most layer after the compression. Following the above example autoencoder, the embedding for $\vec{x}$ is the outputs of layer $l^{(2)}$ during the *feed-forward* process. The embedding can be used as a feature vector to solve different machine learning tasks such as clustering or classification [20].

It is therefore an object of the present invention to provide a method of using autoencoder architectures for representing generated domain names, such that security analysts will be able to efficiently detect new botnets, variants of older botnets (DGA code-reuse) and legitimate DGAs.

It is another object of the present invention to provide a layer of intelligence to current security solutions with respect to the domain representation.

It is a further object of the present invention to propose a novel autoencoder architecture which optimally utilizes both character-aware convolutional layers and bi-directional LSTM layers.

It is still another object of the present invention to discover new botnets DGA which were previously unlabeled in public blacklists.

It is a yet another object of the present invention to identify domains from the same DGA family that share the same seed.

Other objects and advantages of the invention will become apparent as the description proceeds.

## Summary of the Invention

The present invention is defined in the independent claims. Preferred embodiments are defined in the dependent claims.

A method for analyzing and clustering botnets that share the same seed and Domain Generation Algorithms (DGAs) with embedded DGA representations, according to which a DGA classifier selects generated domain names from DNS records and DGA domains that are represented as numerical feature vectors, being embeddings of the DGA domains. The embeddings of the selected domain names are learned by training an autoencoder Neural Network (NN) with the selected domain names and cluster analysis is finally performed to obtain DGA family analysis and verify that a detected DGA is malicious or not, thereby obtaining insights regarding the active botnets, using said embeddings.

A system for analyzing and clustering botnets that share the same seed and Domain Generation Algorithms (DGAs) with embedded DGA representations, which comprises:

    a) a DGA classifier for selecting generated domain names from DNS records;
    b) at least one processor, adapted to:

        represent DGA domains as numerical feature vectors, being embeddings of the DGA domains;
        b) learn the embeddings of the selected domain names by training an autoencoder Neural Network (NN) with the selected domain names; and

    c) perform cluster analysis on the DGA domains, for obtaining DGA family analysis and verifying that a detected DGA is malicious or not, to thereby obtain insights regarding the active botnets, using the embeddings.

The autoencoder may be a deep convolutional autoencoder a bi-directional Long-Term Short-Term having embedding layer in the middle. The autoencoder architectures may be selected from the group of:

- a Basic Character Autoencoder having a representation layer which uses character embedding, a single hidden layer and a decoding layer which being a time distributed output layer;
- a CharCNN Autoencoder;
- a Bin-CharCNN Autoencoder;
- a Seq2Seq-LSTM Autoencoder;
- a Seq2Seq-BiLSTM Autoencoder;
- a CharCNN&BiLSTM Autoencoder.

In one aspect, all autoencoders are configured with the same input and output layer.

The length of each subsequent encoding layer may be halved in size, and each decoding layer increase accordingly.

The DGA classifier may be a BiLSTM classifier, constructed with two LSTMs, each of which shares the same time step input and being connected in opposite directions, where the output is a concatenation of both LSTM outputs.

In one aspect, the autoencoder architecture is a combination of both CharCNN and seq2seq-BiLSTM (CharCNN&BiLSTM).

The network representation layer may be a Char embedding.

The encoding layers may consist of CharCNN encoders which reduce the input length.

In one aspect, the autoencoder architecture includes:

a) a Char-embedding layer that encodes the raw domain to a matrix length of eight with a dimension of five;

b) a CharCNN layer with two filters of size four, three filters of size three, and two filters of size two, entering into max pooling of size two;

c) a first bidirectional LSTM (biLSTM) encoder for transforming each of the time steps into a code vector of size three;

d) a second biLSTM decoder for transforming the repeated code vector to a sequence of size of four with three dimensions;

e) an upsampling layer and a charCNN for transforming the input into the original length with seven dimensions; and

f) a time distributed softmax layer for predicting the character for each time step.

## Brief Description of the Drawings

The above and other characteristics and advantages of the invention will be better understood through the following illustrative and non-limitative detailed description of preferred embodiments thereof, with reference to the appended drawings, wherein:

- Fig. 1 illustrates the process which an attacker performs in order to connect a bot net to a C&C.;
- Fig. 2 presents an example of autoencoder with one compression layer, which reconstructs instances with three features;
- Fig. 3 is an illustration of character-aware convolution network;
- Fig. 4 is an illustration of sequence 2 Sequence (seq2seq) autoencoder;
- Fig. 5 is an illustration of bidirectional recurrent neural network (BiRNN);
- Fig. 6 presents an example of combined CharCNN & seq2seq-BiLSTM architecture;

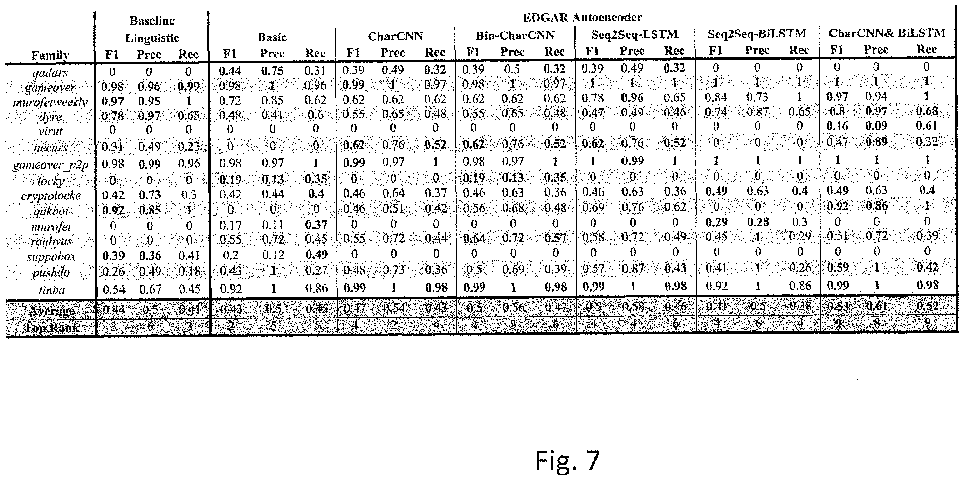

- Fig. 7 shows a table with the methods results per family on the labeled dataset (DA1); and
- Fig. 8 shows an exploration with the CharCNN&BiLSTM embeddings;

## Detailed Description of the Invention

The present invention proposes Embedded DGA Representations (EDGAR) for botnet analysis, based on the analysis of deep autoencoders for representing DGA domains as numerical feature vectors. With this method, it is possible to find embeddings (feature vectors), which not only capture botnet's DGAs, but also the relationship between different DGA variants.

The proposed representation method generally comprises the following steps:

(1) Using a DGA classifier to select generated domain names from DNS records (such as the model in [34]).

(2) Using the selected domains for training an autoencoder Neural Network (NN) to learn their embeddings.

(3) Using the embeddings to perform cluster analysis to obtain insights regarding the active botnets.

There are many kinds of autoencoder architectures. The present invention investigates a variety of architectures and introduces novel modifications, in order to provide a configuration of best captures DGAs. It was found that the best architecture is a deep convolutional autoencoder that has a bi-directional Long-Term Short-Term (LSTM - is a type of recurrent neural network, but instead of simply feeding its outcome into the next part of the network, an LSTM does a bunch of math operations so it can have a better memory) embedding layer in the middle. This model's embeddings significantly improves the final feature representations over the classic linguistic features. By applying the model to a real-world dataset form upper level DNS, it is possible to detect five previously unknown DGA families finally, to distinguish between different domains from same DGA that were generated by a different seed. This capability opens a new method of detecting botnets that share same seed by examining only the domain name.

With the proposed method, security analysts can detect new botnets, variants of older botnets, and detect legitimate DGAs better than conventional methods. The method proposed by present invention uses the domains' representation generated by EDGAR to cluster the domains to meaningful DGA family groups without any prior knowledge on the family label. The EDGAR representation outperformed the baseline approach of linguistic features to cluster DGA families in labeled datasets (blacklists). In addition, in a manual exploration of EDGAR on a real world dataset it was demonstrated how this approach can be used to identify domains of the same DGA family that share the same seed by examining only the domain name. Furthermore, five new botnets DGA which were previously unlabeled in public blacklists were discovered.

## AUTOENCODER ARCHITECTURES FOR EDGAR

There are several existing autoencoder architectures which consider the nominality and locality of strings. An EDGAR can be obtained from any such architecture. A detailed description of these architectures is specified below.

Table 2 presents a summary of autoencoders:

| EDGAR Autoencoder | Input Layer | | Hidden Layers | |
|---|---|---|---|---|
| | Pre-CNN | Char-Embedding | Convolution | LSTM |
| Basic | | X | | |
| CharCNN | | X | X | |
| Bin-CharCNN | X | | X | |
| Seq2Seq-LSTM | | X | | X |
| Seq2Seq-BiLSTM | | X | | X |
| CharCNN&BiLSTM | | X | X | X |

### Table 2: Summary of EDGAR Autoencoders

### Mutual Hyperparameters

All EDGAR autoencoders are configured with the same input and output layer. In order to have the network operate efficiently, it is required to have the length of each subsequent encoding layer to be halved in size, and each decoding layer increase accordingly. To achieve this, the length of the input layer is static and defined as follows: Let the maximum domain length in a dataset be defined as mdl. The model input length n is the first perfect square value after mdl, where a perfect square value is a number that divides by two without any remainder.

Let V be the set of possible characters, and |V| denote the size of that set. In EDGAR autoencoders, the output layer is a time distributed layer with the dimension n-by-|V|. A time distributed layer predicts each character in a sequence using a softmax function (a function that takes as input a vector of $K$ real numbers, and normalizes it into a probability distribution consisting of K probabilities proportional to the exponentials of the input numbers), and the loss is calculated for each position separately. The purpose of using this special output layer is so that the loss is calculated according to each character, and not the sequence of one hot encodings. To train an EDGAR autoencoder, categorical crossentropy loss with the Adam as an optimizer were used.

### Basic Character Autoencoder

The Basic Character Autoencoder has three layers. It uses a character embedding (Char-embedding) layer as its representation layer. This layer finds an encoding for each of the characters which is compact and meaningful. It learns to transform the domains characters to a vector of size d, where d is smaller than |V|. The representation layer is connected to a single hidden layer with 16 dimensions. The EDGAR is obtained from the hidden layer. The decoding layer which follows is a time distributed output layer. For the Basic Character Autoencoder and for all other networks which use Char-embedding layers, d is set to be d = 20.

### Character-aware Convolution (CharCNN)

Character aware convolutional network (CharCNN) is used to extract informative patterns from strings. This architecture is used in various state-of-the-art solutions from different domains. For example, in language models [6, 18], document classification [35] and URL detection algorithms [19, 26]. A CharCNN processes a word as a sequence of characters. The representation layer is a Char-embedding layer and the subsequent layers are one dimension convolution layers with multiple filters in different sizes. To choose the most meaningful values after each filter, a max pooling (max pooling is a sample-based discretization process, for down-sampling an input representation, reducing its dimensionality and allowing for assumptions to be made about features contained in the sub-regions binned) layer is used. These types of layers are used to extract meaningful patterns from the input string.

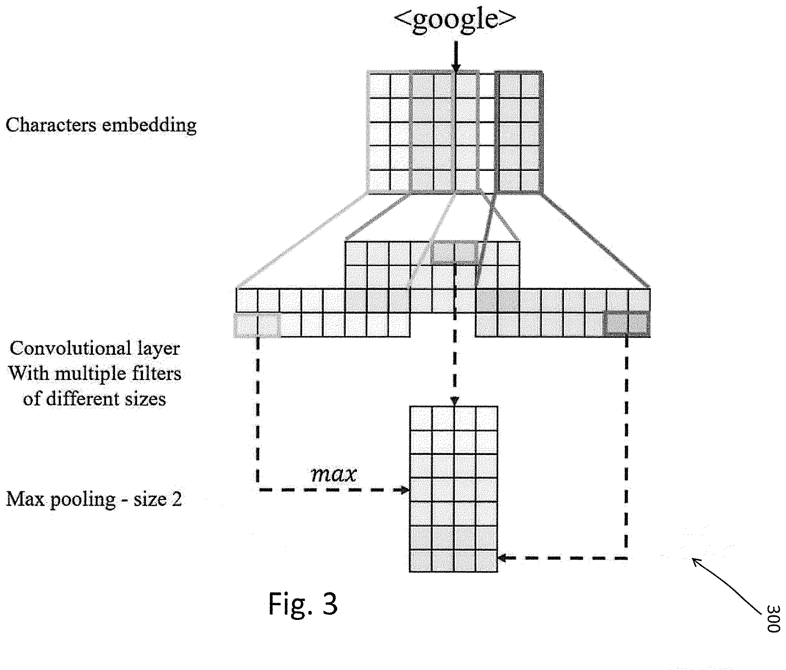

Fig. 3 illustrates how a single CharCNN layer processes a single word. The first layer is the character embedding matrix, where each column represents a character, and each row contains the character embedding. In this example, it can be seen that the CharCNN is built with multiple CNNs (in this case three). The yellow CNN has two filters of size four, the blue CNN has two filters size three and the red filter has two filters size two. A max pooling size of two is applied to each of the CNN filters which reduce their lengths by half. To maintain the sequences' length along the network, the filters use padding. The full CharCNN autoencoder used to obtain EDGAR has five layers. The representation layer is a Char-embedding, CharCNN encoder, and dense layer. The EDGAR is taken from this dense layer. The decoding layers which follow are the CharCNN decoder and a time distributed layer. Both CharCNN layers use RELU activation functions. The filters have the following sizes and quantities accordingly: (size=1, quant.= 30), (2, 20), (3,20), (4,10), (5,10) and (6,10).

### Binary Character-aware Convolution (Bin-CharCNN)

The binary CharCNN autoencoder (Bin-CharCNN) is the same as the CharCNN autoencoder (above), except that the representation layer is a CharCNN instead of a Char-embedding layer. This approach was proposed by [39].

### Sequence to Sequence LSTM (seq2seq-LSTM)

Recurrent Neural Networks (RNN) model the behavior of sequential data [20]. The applications of RNNs vary and include: time series prediction, natural language processing and malicious domain detection [31]. The RNN use cells which are sets of neurons which have feedback loops. The loops connect cells in time step order. The cells also share information between each other in what is referred to as hidden states. Long short term networks (LSTM) [28] are a type of RNN which deals with the vanished / exploding gradient problem in which the hidden states drastically decrease and increase. An LSTM cells facilitate a memory component and produce contextual information in addition to hidden state. LSTMs have been used for character based models, language models [18], embedding twitter messages [13], and malicious domain detection [34]. A sequence to sequence (seq2seq) autoencoder is a multilayer LSTM that maps an input sequence to an output sequence.

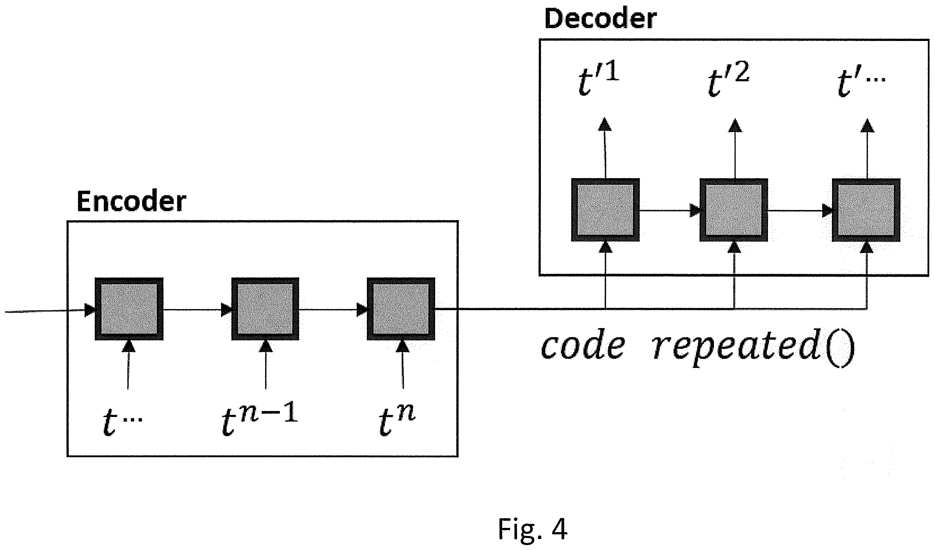

Fig. 4 illustrates a seq2seq architecture. The input sequence is processed by the encoding layer (an LSTM layer) which produces a code vector. The vector is then passed through the decoding layer (also an LSTM layer) where the same code vector is inputted to all of the LSTM's cells. The architecture for obtaining EDGARs is a seq2seq-LSTM which has a Char-embedding layer as a representation layer, and a time distributed layer as its output. The encoded LSTM representation in between the LSTMs is the EDGAR.

### Sequence to Sequence Bidirectional LSTM (seq2seq-BiLSTM)

The seq2seq-BiLSTM has the same architecture as seq2seq-LSTM, except for the core RNN layer which is a bidirectional LSTM (biLSTM). A BiLSTM allows the information in the network to flow in both forward and backward directions [28].

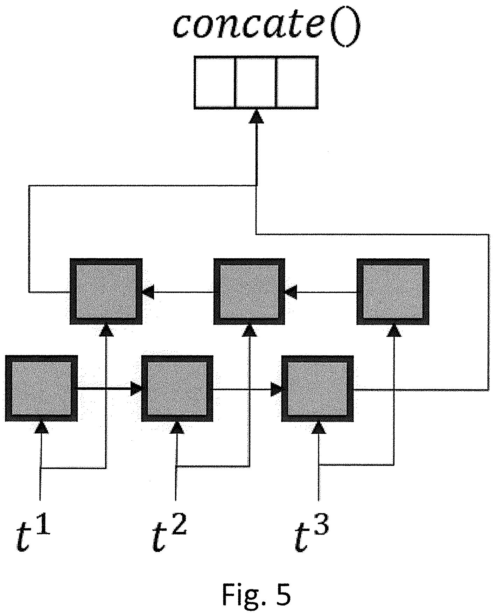

Fig. 5 illustrates a biLSTM network constructed with two LSTMs. Each LSTM shares the same time step input, but they are connected in opposite directions: one is connected forward as a regular LSTM, and the second is connected backward. The output is a concatenation of both LSTM outputs.

### Combined CharCNN & seq2seq-BiLSTM (CharCNN&BiLSTM)

The present invention proposes a new architecture for the purpose of EDGAR, a combination of both CharCNN & seq2seq-BiLSTM (CharCNN&BiLSTM). The purpose of the combination of the two approaches is to obtain the best of both methods: the CharCNN is known for its ability for detecting DGAs and other malicious URLs, and the BiLSTM is good at classifying DGA families. For this architecture, the network representation layer is a Char embedding. The encoding layers consist of CharCNN encoders which reduce the input length by half and 100 dimensions. Next, a seq2seq-BiLSTM encodes and decodes the string's representation. The encoded LSTM representation is the EDGAR. Then the output is upsampled as it is connected to a decoding charCNN. Finally, the output layer is a time distributed layer. The combined architecture has the same hyper-parameters as in the Char-embedding (d dimension) CharCNN (filter amount and sizes) and the original seq2seq-BiLSTM (16 dimensions and repeated vector).

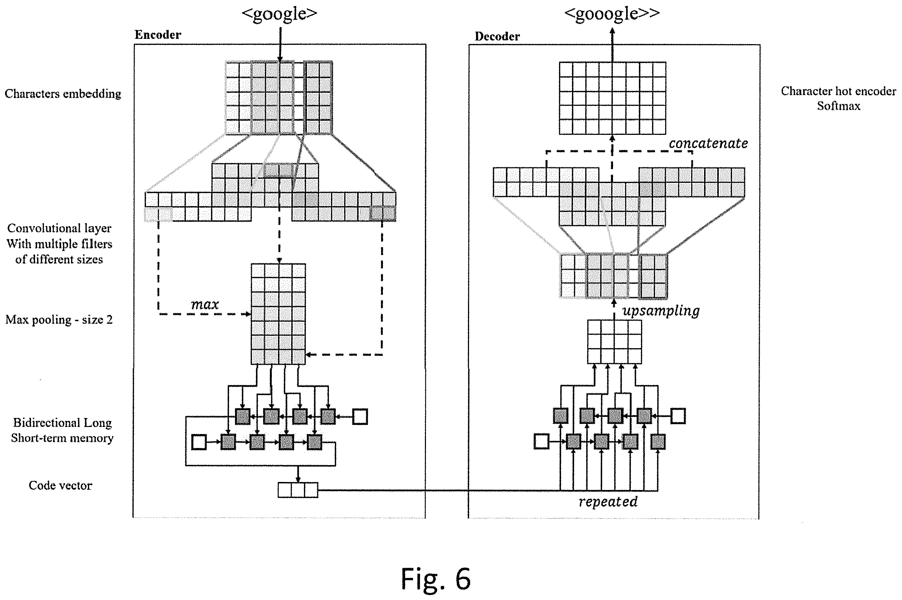

Fig. 6 is an example of this architecture with the following layers:

(1) A Char-embedding layer encodes the raw domain to a matrix length of eight (maximum domain name length of this example) with a dimension of five.

(2) A CharCNN layer with two filters of size four (yellow), three filters of size three (blue), and two filters of size two (red) enter into max pooling of size two.

(3) A bidirectional LSTM (biLSTM) encoder transforms each of the time steps into a code vector of size three.

(4) A second biLSTM decoder transforms the repeated code vector to a sequence of size of four with three dimensions.

(5) An upsampling layer and charCNN transforms the input into the original length with seven dimensions.

(6) A time distributed softmax layer predicts the character for each time step.

## EXPERIMENT SETUP

To evaluate EDGAR cluster analysis has been performed on EDGAR's embeddings. Two evaluations were performed:

**(1) Validation:** Using labeled DGA datasets, the embeddings produced by each of the EDGAR architectures with the k-means algorithm were clustered. Then, an evaluation of how informative each of the architectures' embeddings was performed by testing various clustering metrics on the clustering results. As a baseline, an evaluation of the linguistic representations used in previous works was also performed.

**(2) Exploration:** Using the best architecture obtained from the validation, a principal component analysis (PCA) was applied on a real world dataset containing billions of records. The domains' representations have been explored and their meanings have been analyzed. The dataset was further explored using the linguistic feature representation and the differences compared to EDGAR have been observed. EDGAR capability to differentiate domains from same family but with different seeds was also demonstrated.

### The Datasets

For the evaluations, three datasets containing different DGA families were extracted. The first two datasets are the labeled datasets which were used for the validation. These datasets were taken from the DGA Archive [25] and contain DGA samples only. The third dataset was used in the exploration phase. It contains all of the domain names captured by the upper level DNS servers of large telecommunications providers, and thus contains unlabeled DGA and non-DGA samples. As such, this dataset is likely to contain samples of DGA variants which have not been reported in blacklists. This dataset is also used for validation by filtering and focusing on the domains that were found in the blacklist. To filter the DGA domains a state-of-the-art binary LSTM classifier that is designed for DGA detection [34] was trained. The training was based on Keras [10] and tensorflow backend [1]. The classifier was trained with a GPU machine on blacklist generated from DGA archive and the Amazon's Alexa 1 million whitelist. To apply the model in distributed manner a Spark [37] was configured to apply the model in each executer separately. Executing the model took five minutes for ten million domains (one hour of DNS data) with ten Spark executors; this results with approximately 0.03 millisecond per domain. DGA-looking domains that the model predicted with confidence level of 0.99 were filtered out. To tighten the filter domains that appeared in the DGA archive blacklist were added. After applying the filter, 162 legitimate Alexa website, 1,045,669 unknown domains and 42,799 known DGA families were left.

Table 3 illustrates upper DNS volume summary for one day:

**Table 3: Upper DNS volume summary for one day.**

|  | Records count | Size |
|---|---|---|
| *Raw Data* | 7,964,527,866 | 732GB |
| *distinct domains* | 22,144,594 | 1.6GB |

The datasets are summarized in Table 4, and are detailed as follows:

**DA1**: This dataset contains 15 DGA families from DGA Archive.

Each family has 47,000 distinct domains. This dataset has many domains, but only a few types of DGAs. Therefore, this dataset is used to determine how well the methods are able to distinguish between distinct DGA families.

**DA2:** This dataset contains 50 DGA families from DGA Archive.

Each family has 1,000 distinct domains. This dataset has only a few domains, but a wide variety of DGAs. This dataset is used to evaluate the methods' ability to distinguish between similar DGA families.

**DR:** This dataset contains approximately eight billion DNS records (22 million distinct domains). From the 22 million records, 1,045,699 DGA domains records where selected using the DGA classier in [34] and a threshold of 0.99. According to the DGA Archive, the 1,045,699 domains contained 42,799 different DGA domains belonging to 50 known DGA families.

**Table 4: Dataset summary** - **for each of the dataset we present general statistics on the DGA families.**

| Dataset | Domains | DGA Families | per family |
|---|---|---|---|
| *DA1* | 705,000 | 15 | 47,000 |
| *DA2* | 50,000 | 50 | 1,000 |

(continued)

| Dataset | Domains | DGA Families | per family |
|---|---|---|---|
| DR | 22,144,594 | 50 | - |

## Domain name feature extraction

Baseline methods: the EDGAR methods were compared to the linguistic based method that does not require any dictionary or labeled domain listing. The features are: domain length, entropy, ratio of consonants, ratio of vowels and ratio of digits.

EDGAR methods: the capability of each of the EDGAR autoencoders were evaluated and summarized in Table 2, all the networks on with Keras library [10] were built using tensorflow backend [1], and the models were trained on GPU machine: NVidia GeForce GTX1080Ti. The training setup is 50 epochs and the training was stopped after 10 epochs with no improvement (early stopping). Depending on the size of dataset volume, a batch size and an epoch size (the amount of records to generate for the epoch training) was set, dataset with high volume of data will have higher batch size and higher epoch size. For DA1 dataset with 705,000 domains, the epoch size was set to 100,000 and the batch size was set to 256. For DA2 with 50,000 domains the epoch size was set to 30000 and the batch size to 128, and for the DR dataset the epoch size was set to 250000 and the batch size to 256.

## Performance and evaluation

To evaluate the performance of the different features extraction methods a simple k-means clustering model was trained. K-means is a simple and yet popular algorithm for clustering analysis in big data distribution frameworks such as Spark [37]. K-means algorithm trains to separate the data to k meaningful clusters. The algorithm starts with k random centroids. In each iteration, the algorithm group the closest instances for each centroid and a new centroid is calculated based on the means of the group features. The algorithm stops when the clusters' instances remain the same as in the previous iteration. For each cluster detected by k-means, their class label C was set to the dominant DGA family (label) found in that cluster. Next an external validation metrics was computed to evaluate how informative the embedding were (i.e., how easily it was for k-mean to cluster the data correctly). The following external validation metrics have been used:

**Precision (prec)** computes the model ability to assign the correct label out of all the instances in cluster label.

$$Precision(C, Y) = \frac{correct\ class}{predict\ class}$$

Recall (rec): compute the model ability to retrieve all the instances of a certain class; i.e., the model ability to retrieve all the domains of a certain family.

$$Recall(C, Y) = \frac{correct\ class}{entire\ class}$$

**F1 score**: combine precision and recall together into one score using harmonic mean

$$F1(C, Y) = 2 * \frac{precision(C, Y) * recall(C, Y)}{precision(C, Y) + recall(C, Y)}$$

**Adjusted Rand Index (ARI):** The Rand Index (RI) is defined as

$$RandIndex(C, Y) = \frac{a + b}{a + b + c + d}$$

where a+b is the number of agreements and c+d is the number of disagreement between the clustering model and the real label. This measure calculates the agreement between two clustering models on the assignments of pair instances in a same or different cluster (if ARI=1, then there is a perfect agreement between the labelings).

In this case, the second cluster is the true DGA family, therefore, the RI acts as an accuracy measure. The Adjusted Rand Index is the same as the RI, except that the value is adjusted for the chance grouping of the elements and can therefore lead to negative values as well.

**Normalized Mutual Information (NMI)**: is a popular measure for clustering quality and computes the entropy reduction of the class label with the knowledge of cluster label.

$$NMI(C,Y) = \frac{2 * (entropy(Y) - entropy(Y|C))}{entropy(Y) + entropy(C)}$$

Based on the computed metric a weighted average that considers the number of instances in each class label was applied. Furthermore, to demonstrate the methods capabilities per family the precision, recall and F1 scores for each family were computed on the DA1 with 15 families.

## RESULTS

The validation and exploration results of the linguistic and EDGAR features are presented below. There is a validation of EDGAR performance in task of clustering DGA generated domains to families. This was done by applying the proposed clustering method on the labeled dataset DA1, DA2 and on the labeled domains from the DR dataset. In the exploration phase the baseline linguistic approach and the best performing EDGAR autoencoder were applied to represent the domains. Then, their representations capabilities to identify DGA families and to separate domains of the same DGA by the DGA algorithm initial seed have been manually explored.

### Validation of EDGAR

To validate EDGAR ability to detect DGA families the k-means clustering algorithm on the different feature extraction methods was applied. The results are presented in Table 5. The results of the outperforming configurations are marked in Bold. For both labeled datasets (DA1 and DA2) the CharCNN&BiLSTM representation achieved significantly better clustering results. Tables 5a and 5b present the averaged results calculated per cluster, the CharCNN&BiLSTM got the best averaged ARI and F1 scores of 0.44 and 0.69 in the DA1 and 0.3 and 0.5 in the DA2, the seq2seq networks were second with averaged ARI and F1 scores of 0.43 and 0.66 in DA1 and 0.29 and 0.48 in DA2. For the real world dataset (DR) only labeled DGA generated domains were filtered out and the same clustering and performance evaluation as for the labeled datasets was performed. Table 5c presents the averaged results calculated per cluster, the CharCNN&BiLSTM got the best averaged ARI and F1 scores of 0.39 and 0.62, the clusters based on seq2seq networks were second with averaged ARI and F1 scores of 0.28 and 0.55. Table 7 presents the clustering performance for each family on DA1 and bold the best performing values. The bottom row summarizes the families' performance for each method in two manners, an average of the scores and the number of best performing results. CharCNN&BiLSTM was the only model to identify the virut family but failed to identify qadars, locky, murofet and suppobox. Nevertheless, the results on the DR CharCNN&BiLSTM outperform on these families. In the overall performance the CharCNN&BiLSTM got the best averaged result with 0.52 F1 score compare to the linguistic features with 0.44 F1 score. CharCNN&BiLSTM has the best F1 in nine families, more than twice than the second best models. The linguistic and the Basic autoencoders had the worst results with only three and two families with best F1 score. To summarize, the CharCNN&BiLSTM showed the best overall results to improve a clustering algorithm to identify known DGA families. The CharCNN&BiLSTM showed 25% to 38% improvement than clusters that are based on the linguistic features. The seq2seq autoencoders came second with minor advantage of the seq2seqbiLSTM over seq2seq-LSTM. The next methods were the CharCNN networks and lastly the Basic and the linguistic features that had the worst performance in most of the experiments.

| Domain name representation | | F1 | Prec | Rec | ARI | NMI |
|---|---|---|---|---|---|---|
| Baseline | Linguistic | 0.56 | 0.70 | 0.33 | 0.50 | 0.55 |
| EDGAR Autoencoder | Basic | 0.57 | 0.79 | 0.35 | 0.50 | 0.59 |
| | CharCNN | 0.61 | 0.72 | 0.39 | 0.54 | 0.59 |
| | Bin-CharCNN | 0.62 | 0.71 | 0.40 | 0.56 | 0.59 |
| | Seq2Seq-LSTM | 0.66 | 0.78 | 0.43 | 0.58 | 0.62 |
| | Seq2Seq-BiLSTM | 0.59 | **0.89** | 0.35 | 0.50 | 0.62 |
| | CharCNN&BiLSTM | **0.69** | 0.88 | **0.44** | **0.61** | **0.66** |

(a) DA1 - 15 families

| Domain name representation | | F1 | Prec | Rec | ARI | NMI |
|---|---|---|---|---|---|---|
| Baseline | Linguistic | 0.36 | 0.59 | 0.18 | 0.29 | 0.49 |
| EDGAR Autoencoder | Basic | 0.20 | 0.41 | 0.06 | 0.14 | 0.22 |
| | CharCNN | 0.44 | 0.74 | 0.24 | 0.33 | 0.55 |
| | Bin-CharCNN | 0.47 | 0.73 | 0.26 | 0.37 | 0.56 |
| | Seq2Seq-LSTM | 0.46 | 0.69 | 0.28 | 0.38 | 0.58 |
| | Seq2Seq-BiLSTM | 0.48 | 0.77 | 0.29 | 0.39 | 0.61 |
| | CharCNN&BiLSTM | **0.50** | **0.78** | **0.30** | **0.42** | **0.63** |

(b) DA2 - 50 families

| Domain name representation | | F1 | Prec | Rec | ARI | NMI |
|---|---|---|---|---|---|---|
| Baseline | Linguistic | 0.50 | 0.83 | 0.15 | 0.40 | 0.36 |
| EDGAR Autoencoder | Basic | 0.53 | **0.84** | 0.23 | 0.43 | 0.46 |
| | CharCNN | 0.49 | 0.61 | 0.21 | 0.41 | 0.39 |
| | Bin-CharCNN | 0.35 | 0.66 | 0.03 | 0.26 | 0.11 |
| | Seq2Seq-LSTM | 0.55 | 0.71 | 0.28 | 0.49 | 0.47 |
| | Seq2Seq-BiLSTM | 0.55 | 0.70 | 0.28 | 0.49 | 0.47 |
| | CharCNN&BiLSTM | **0.62** | 0.80 | **0.39** | **0.54** | **0.53** |

(c) DR - real world with 50 labeled families

Table 5: clustering results on labeled Datasets

**Exploration of EDGAR's embeddings on big data**

The exploration was conducted on the features from the linguistic baseline and the embeddings of the best performing EDGAR architecture, CharCNN&BiLSTM. To visualize the embedding a dimensionality reduction was performed with Principal Component Analysis (PCA) and the two most meaningful dimensions have been observed.

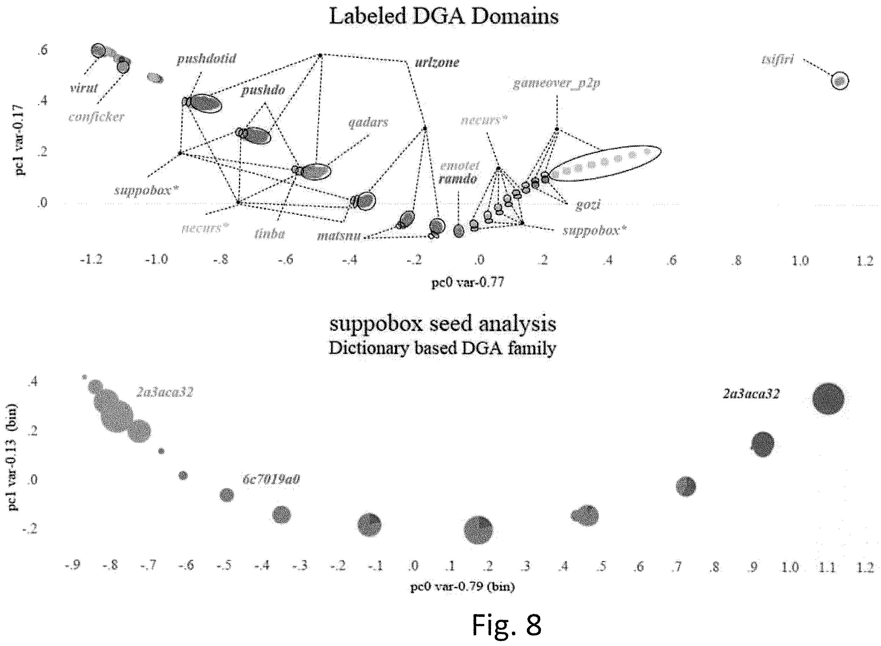

Fig. 8 presents two types of exploration analysis using the CharCNN&BiLSTM; the upper plot explores the labeled DGA families and the second explore the seed behavior of a suppobox DGA. In the upper plot in Fig. 8 the axes are the two most meaningful dimensions from the PCA, each dot is a domain and the color is a family of DGA. By exploring the clusters some "pure" groups of the families such as virut, conficker, gameover p2p and tsfiri were found. A deeper inspection was also conducted on the other groups and three types of sub groups that shares similar semantics regarding the DGA family have been found. The type-a sub group domains seems to have dictionary words as seen in DGA families: suppobox, matsnu and gozi. Type-b sub group domains are random letters domains: necurs, cryptolocker, ramdo and gameover-p2p. The type-c sub group seems to have also digits with more randomize characters like the DGA families: urlzone, qadars and emotet. The suppbox, necrus and urlzpne repeats in most of their typed sub groups, to ease the reading of the plot suppbox and necrus were written twice and were marked with * sign.

The bottom plot of Fig. 8 explores the domains from different seeds generated by suppobox, a dictionary-based DGA. From the results it can be seen that EDGAR can successfully separate between different seeds. The seed 3cb79ffc (orange) is completely separated from the other seeds. The seeds 6c7019a0 (red) and 2a3aca32 (blue) are also separated with some overlap between them.

**References**

[1] Martín Abadi, Ashish Agarwal, Paul Barham, Eugene Brevdo, Zhifeng Chen, Craig Citro, Greg S. Corrado, Andy Davis, Je%rey Dean, Matthieu Devin, Sanjay Ghemawat, Ian Goodfellow, Andrew Harp, Geo%rey Irving, Michael Isard, Yangqing Jia, Rafal Jozefowicz, Lukasz Kaiser, Manjunath Kudlur, Josh Levenberg, Dandelion Mane, Rajat Monga, Sherry Moore, Derek Murray, Chris Olah, Mike Schuster, Jonathon Shlens, Benoit Steiner, Ilya Sutskever, Kunal Talwar, Paul Tucker, Vincent Vanhoucke, Vijay Vasudevan, Fernanda Viégas, Oriol Vinyals, Pete Warden, Martin Wattenberg, Martin Wicke, Yuan Yu, and Xiaoqiang Zheng. 2015. TensorFlow: Large-Scale Machine Learning on Heterogeneous Systems. https://www.tensor#ow.org/ Software available from tensorflow.org.

[2] Aashna Ahluwalia, Issa Traore, Karim Ganame, and Nainesh Agarwal. 2017. Detecting Broad Length Algorithmically Generated Domains. Lecture Notes in Computer Science (including subseries Lecture Notes in Arti"cial Intelligence and Lecture Notes in Bioinformatics) 10618 LNCS (2017), 19 34. https://doi.org/10.1007/978-3-319-69155-8 {_}2

[3] Manos Antonakakis and Roberto Perdisci. 2012. From throw-away traffic to bots: detecting the rise of DGA-based malware. Proceedings of the 21st USENIX Security Symposium (2012), 16. https://www.usenix.org/system/"les/conference/ usenixsecurity12/sec12-"nal127.pdf

[4] Manos Antonakakis, Roberto Perdisci, David Dagon, Wenke Lee, and Nick Feamster. 2010. Building a Dynamic Reputation System for DNS. USENIX Security'10: Proceedings of the 19th USENIX conference on Security (2010), 1-17. https://doi.org/10.1145/2584679

[5] Alejandro Correa Bahnsen, Eduardo Contreras Bohorquez, Sergio Villegas, Javier Vargas, and Fabio A. Gonzalez. 2017. Classifying phishing URLs using recurrent neural networks. eCrime Researchers Summit, eCrime (2017), 1-8. https://doi. org/10.1109/ECRIME.2017.7945048

[6] Yonatan Belinkov and James Glass. 2016. A Character-level Convolutional Neural Network for Distinguishing Similar Languages and Dialects. (2016). https://doi.org/10.1088/1751-8121/aa5bc1

[7] Pavol Bielik, Veselin Raychev, and Martin Vechev. 2017. Character Level Based Detection of Dga Domain Names. (2017), 1-17.

[8] Leyla Bilge. 2011. E XPOSURE : a Passive DNS Analysis Service to Detect and Report Malicious Domains. V, 4 (2011).

[9] H. Binsalleeh, T. Ormerod, A. Boukhtouta, P. Sinha, A. Youssef, M. Debbabi, and L. Wang. 2010. On the analysis of the Zeus botnet crimeware toolkit. PST 2010: 2010 8th International Conference on Privacy, Security and Trust (2010), 31-38. https://doi.org/10.1109/PST.2010.5593240

[10] François Chollet et al. 2015. Keras. https://github.com/fchollet/keras.

[11] Howard B. Demuth, Mark H. Beale, Orlando De Jess, and Martin T. Hagan. 2014. Neural Network Design (2nd ed.). Martin Hagan, USA.

[12] Jega Anish Dev. 2014. Bitcoin mining acceleration and performance quantification. Canadian Conference on Electrical and Computer Engineering (2014), 1-6. https://doi.org/10.1109/CCECE.2014.6900989

[13] Bhuwan Dhingra, Zhong Zhou, Dylan Fitzpatrick, Michael Muehl, and WilliamW. Cohen. 2016. Tweet2Vec: Character-Based Distributed Representations for Social Media. (2016). https://doi.org/10.18653/vl/P16-2044

[14] Catherine Everett. 2009. The lucrative world of cyber-espionage. Computer Fraud and Security 2009, 7 (2009), 5-7. https://doi.org/10.1016/S1361-3723(09)70084-3

[15] Nazrul Hoque, Dhruba K. Bhattacharyya, and Jugal K. Kalita. 2015. BHoque, N., Bhattacharyya, D. K., & Kalita, J. K. (2015). Botnet in DDoS Attacks: Trends and Challenges. IEEE Communications Surveys and Tutorials, 17(4),

2242aĂŞ2270. http://doi.org/10.1109/COMST.2015.2457491otnet in DDoS Attacks: Trends and Challenges. IEEE Communications Surveys and Tutorials 17, 4 (2015), 2242-2270. https://doi.org/10.1109/COMST.2015.2457491

[16] Guang-Bin Huang, Qin-Yu Zhu, and Chee-Kheong Siew. 2004. Extreme learning machine: a new learning scheme of feedforward neural networks. In Neural Networks, 2004. Proceedings. 2004 IEEE International Joint Conference on, Vol. 2. IEEE, 985-990.

[17] T Jayalakshmi and Santhakumaran A. 2011. Statistical normalization and back propagation for classi"cation. 3 (01 2011), 89-93.

[18] Yoon Kim, Yacine Jernite, David Sontag, and Alexander M. Rush. 2015. Character-Aware Neural Language Models. (2015). https://doi.org/2

[19] Hung Le, Quang Pham, Doyen Sahoo, and Steven C. H. Hoi. 2018. URLNet: Learning a URL Representation with Deep Learning for Malicious URL Detection. i (2018). http://arxiv.org/abs/1802.03162

[20] Yann Lecun, Yoshua Bengio, and Geo%rey Hinton. 2015. Deep learning. Nature 521, 7553 (2015), 436-444. https://doi.org/10.1038/naturel4539

[21] Baojun Liu, Chaoyi Lu, Zhou Li, Ying Liu, Haixin Duan, Shuang Hao, and Zaifeng Zhang. [n. d.]. A Reexamination of Internationalized Domain Names : the Good , the Bad and the Ugly. ([n. d.]).

[22] X Luo, LWang, Z Xu, J Yang,MSun, and JWang. 2017. DGASensor: Fast detection for DGA-based malwares. ACM International Conference Proceeding Series Part F1280 (2017), 47-53. https://doi.org/10.1145/3057109.3057112

[23] Hieu Mac, Duc Tran, Van Tong, Linh Giang Nguyen, and Hai Anh Tran. 2017. DGA Botnet Detection Using Supervised Learning Methods. Proceedings of the Eighth International Symposium on Information and Communication Technology (2017), 211-218. https://doi.org/10.1145/3155133.3155166

[24] Miranda Mowbray and Josiah Hagen. 2014. Finding domain-generation algorithms by looking at length distribution. Proceedings - IEEE 25th International Symposium on Software Reliability Engineering Workshops, ISSREW 2014 (2014), 395-400. https://doi.org/10.1109/ISSREW.2014.20

[25] Daniel Plohmann, Khaled Yakdan, Michael Klatt, and Elmar Gerhards-Padilla. 2016. A Comprehensive Measurement Study of Domain Generating Malware. Proceedings of the 25th USENIX Security Symposium (2016). https://www.usenix. org/conference/usenixsecurityl6/technical-sessions/presentation/plohmann

[26] Joshua Saxe and Konstantin Berlin. 2017. eXpose: A Character-Level Convolutional Neural Network with Embeddings For Detecting Malicious URLs, File Paths and Registry Keys. (2017). http://arxiv.org/abs/1702.08568

[27] Stefano Schiavoni, Federico Maggi, Lorenzo Cavallaro, and Stefano Zanero. 2014. Phoenix: DGA-based botnet tracking and intelligence. Lecture Notes in Computer Science (including subseries Lecture Notes in Arti"cial Intelligence and Lecture Notes in Bioinformatics) 8550 LNCS (2014), 192-211. https://doi.org/10.1007/ 978-3-319-08509-8{_}11

[28] Mike Schuster and Kuldip K. Paliwal. 1997. Bidirectional recurrent neural networks. IEEE Transactions on Signal Processing 45, 11 (1997), 2673-2681. https://doi.org/10.1109/78.650093

[29] Suvrit Sra, Sebastian Nowozin, and Stephen J Wright. 2012. Optimization for machine learning. Mit Press.

[30] Van Tong and Giang Nguyen. 2016. A method for detecting DGA botnet based on semantic and cluster analysis. Proceedings of the Seventh Symposium on Information and Communication Technology - SoICT '16(2016), 272-277. https: //doi.org/10.1145/3011077.3011112

[31] Duc Tran, Hieu Mac, Van Tong, Hai Anh Tran, and Linh Giang Nguyen. 2018. A LSTM based framework for handling multiclass imbalance in DGA botnet detection. Neurocomputing 275 (2018), 2401-2413. https://doi.org/10.1016/j. neucom.2017.11.018

[32] Tzy Shiah Wang, Hui Tang Lin, Wei Tsung Cheng, and Chang Yu Chen. 2017. DBod: Clustering and detecting DGA-based botnets using DNS tra!c analysis. Computers and Security 64 (2017), 1-15. https://doi.org/10.1016/j.cose.2016.10.001

[33] Jonathan Woodbridge, Hyrum S. Anderson, Anjum Ahuja, and Daniel Grant. 2016. Predicting Domain Generation Algorithms with Long Short-Term Memory Networks. (2016). http://arxiv.org/abs/1611.00791

[34] Jonathan Woodbridge, Hyrum S. Anderson, Anjum Ahuja, and Daniel Grant. 2016. Predicting Domain Generation Algorithms with Long Short-Term Memory Networks. (2016). http://arxiv.org/abs/1611.00791

[35] Yijun Xiao and Kyunghyun Cho. 2016. Efficient Character-level Document Classi"cation by Combining Convolution and Recurrent Layers. (2016). http://arxiv.org/abs/1602.00367

[36] Bin Yu, Daniel L. Gray, Jie Pan, Martine De Cock, and Anderson C.A. Nascimento. 2017. Inline DGA detection with deep networks. IEEE International Conference on Data Mining Workshops, ICDMW 2017-Novem (2017), 683-692. https://doi. org/10.1109/ICDMW.2017.96

[37] Matei Zaharia, Michael J. Franklin, Ali Ghodsi, Joseph Gonzalez, Scott Shenker, Ion Stoica, Reynold S. Xin, Patrick Wendell, Tathagata Das, Michael Armbrust, Ankur Dave, Xiangrui Meng, Josh Rosen, and Shivaram Venkataraman. 2016. Apache Spark: a uni"ed engine for big data processing. Commun. ACM 59, 11 (2016), 56-65. https://doi.org/10.1145/2934664

[38] Han Zhang. 2016. BotDigger: Detecting DGA Bots in a Single Network. Tma (2016).

[39] Xiang Zhang and Yann LeCun. 2018. Byte-Level Recursive Convolutional Auto- Encoder for Text. (2018). http://arxiv.org/abs/1802.01817

**Claims**

1. A method performed by at least one processor for analyzing and clustering botnets that share a same seed and Domain Generation Algorithms (DGAs) with embedded DGA representations, comprising:

   a) selecting, by a DGA classifier model, DGA-generated domain names from DNS records;
   b) representing said DGA-generated domain names as numerical feature vectors;
   c) learning embeddings of the selected domain names by training an autoencoder Neural Network (NN) with said selected domain names, wherein said autoencoder is a deep convolutional autoencoder that has a bi-directional Long-Term Short-Term embedding layer in the middle, and wherein all autoencoders of said Neural Network are configured with a same input and output layer; and
   d) performing cluster analysis on said DGA-generated domain names for obtaining DGA family analysis and determining whether a detected DGA is malicious or not, and for detecting active botnets that share a same seed by examining only the domain name, using said embeddings,

   wherein said method further comprises a step of:
   e) applying the model to a real-world dataset from an upper level DNS of said DNS records to detect previously unknown DGA families and distinguishing between different domains from a same DGA that were generated by a different seed.

2. The method according to claim 1, wherein a length of each subsequent encoding layer is halved in size, and each decoding layer increase accordingly.

3. The method according to claim 1, wherein the DGA classifier is a BiLSTM classifier, constructed with two LSTMs, each of which shares a same time step input and being connected in opposite directions, where the output is a concatenation of both LSTM outputs.

4. The method according to claim 1, wherein the autoencoder is a combination of both CharCNN and seq2seq-BiLSTM (CharCNN&BiLSTM).

5. The method according to claim 1, wherein a network representation layer is a Char embedding or wherein encoding layers consist of CharCNN encoders which reduce an input length.

6. The method according to claim 1, wherein the autoencoder includes:

a) a Char-embedding layer that encodes a raw domain to a matrix length of eight with a dimension of five;
b) a CharCNN layer with two filters of size four, three filters of size three, and two filters of size two, entering into max pooling of size two;
c) a first bidirectional LSTM (biLSTM) encoder for transforming each time step into a code vector of size three;
d) a second biLSTM decoder for transforming a repeated code vector to a sequence of size of four with three dimensions;
e) an upsampling layer and a charCNN for transforming the input into an original length with seven dimensions; and
f) a time distributed softmax layer for predicting a character for each time step.

7. A system for analyzing and clustering botnets that share a same seed and Domain Generation Algorithms (DGAs) with embedded DGA representations, comprising:

a) a DGA classifier model for selecting DGA-generated domain names from DNS records; and
b) at least one processor, configured to:

i. represent said DGA-generated domain names as numerical feature vectors;
ii. learn embeddings of the selected domain names by training an autoencoder Neural Network (NN) with said selected domain names, wherein said autoencoder is a deep convolutional autoencoder that has a bi-directional Long-Term Short-Term embedding layer in the middle, and wherein all autoencoders of said Neural Network are configured with a same input and output layer; and
iii. perform cluster analysis on said DGA-generated domains, for obtaining DGA family analysis and determining whether a detected DGA is malicious or not, and for detecting active botnets that share a same seed by examining only the domain name, using said embeddings,

wherein
said at least one processor is additionally configured to:
iv. apply the model to a real-world dataset from an upper level DNS of said DNS records, to detect previously unknown DGA families and distinguish between different domains from a same DGA that were generated by a different seed.

8. The system according to claim 7, in which a length of each subsequent encoding layer is halved in size, and each decoding layer increase accordingly.

9. The system according to claim 7, in which the DGA classifier is a BiLSTM classifier, constructed with two LSTMs, each of which shares a same time step input and being connected in opposite directions, where the output is a concatenation of both LSTM outputs.

10. The system according to claim 7, in which the autoencoder has an architecture being is a combination of both CharCNN and seq2seq-BiLSTM (CharCNN&BiLSTM), in which a network representation layer is a Char embedding, or in which encoding layers consist of CharCNN encoders which reduce an input length.

11. The system according to claim 7, in which the autoencoder includes:

a) a Char-embedding layer that encodes a raw domain to a matrix length of eight with a dimension of five;
b) a CharCNN layer with two filters of size four, three filters of size three, and two filters of size two, entering into max pooling of size two;
c) a first bidirectional LSTM (biLSTM) encoder for transforming each time step into a code vector of size three;
d) a second biLSTM decoder for transforming a repeated code vector to a sequence of size of four with three dimensions;
e) an upsampling layer and a charCNN for transforming the input into an original length with seven dimensions; and
f) a time distributed softmax layer for predicting a character for each time step.

**Patentansprüche**

1. Ein Verfahren, das von mindestens einem Prozessor zum Analysieren und Clustern von Botnetzen durchgeführt wird, einen gleichen Seed- und Domän-GenerierungsAlgorithmus (DGA) mit eingebetteten DGA-Darstellungen teilen, umfassend

    a) Auswählen von DGA-generierten Domainnamen aus DNS-Einträgen durch ein DGA-Klassifizierungsmodell;
    b) Darstellen der DGA-generierten Domänennamen als numerische Merkmal svektoren;
    c) Lernen von Einbettungen der ausgewählten Domänennamen durch Trainieren eines neuronalen Autoencoder-Netzwerks (NN) mit den ausgewählten Domänennamen, wobei der Autoencoder ein tiefer Konvolution-Autoencoder ist, der eine bidirektionale Langzeit-Kurzzeit-Einbettungsschicht in der Mitte aufweist, und wobei alle Autoencoder des neuronalen Netzwerks mit einer gleichen Eingangs- und Ausgangsschicht konfiguriert sind; und
    d) Durchführen einer Clusteranalyse an den DGA-erzeugten Domänennamen, um eine DGA-Familienanalyse zu erhalten und zu bestimmen, ob eine erkannte DGA bösartig ist oder nicht, und um aktive Botnetze zu erkennen, die einen gleichen Seed teilen, indem nur der Domänenname unter Verwendung der Einbettungen untersucht wird,

    wobei das Verfahren ferner einen Schritt umfasst:
    e) Anwendung des Modells auf einen realen Datensatz aus einem DNS der oberen Ebene der DNS-Einträge, um zuvor unbekannte DGA-Familien zu erkennen und zwischen verschiedenen Domänen von einer gleichen DGA, die durch einen anderen Seed generiert wurden, zu unterscheiden.

2. Verfahren nach Anspruch 1, wobei eine Länge jeder nachfolgenden Kodierschicht in ihrer Größe halbiert und jede Dekodierschicht entsprechend vergrößert wird.

3. Verfahren nach Anspruch 1, wobei der DGA-Klassifikator ein BiLSTM-Klassifikator ist, der aus zwei LSTMs aufgebaut ist, die jeweils einen gleichen Zeitschritt-Eingang haben und in entgegengesetzte Richtungen geschaltet sind, wobei der Ausgang eine Verkettung der beiden LSTM-Ausgänge ist.

4. Verfahren nach Anspruch 1, wobei der Autoencoder eine Kombination von sowohl CharCNN als auch seq2seq-BiLSTM (CharCNN&BiLSTM) ist.

5. Verfahren nach Anspruch 1, wobei eine Netzwerk-Repräsentationsschicht eine Char-Einbettung ist oder wobei Kodierschichten aus CharCNN-Encodern bestehen, die die Eingabelänge reduzieren.

6. Verfahren nach Anspruch 1, wobei der Autoencoder umfasst:

    a) eine Char-Einbettungsschicht, die die Rohdomäne auf eine Matrixlänge von acht mit einer Dimension von fünf kodiert;
    b) eine CharCNN-Schicht mit zwei Filtern der Größe vier, drei Filtern der Größe drei und zwei Filtern der Größe zwei, die in ein Max-Pooling der Größe zwei eintreten;
    c) einen ersten bidirektionalen LSTM-Encoder (biLSTM) zur Umwandlung jedes Zeitschritts in einen Codevektor der Größe drei;
    d) einen zweiten biLSTM-Decoder zur Umwandlung eines wiederholten Codevektors in eine Sequenz der Größe vier mit drei Dimensionen;
    e) eine Upsampling-Schicht und ein charCNN zur Umwandlung der Eingabe in die ursprüngliche Länge mit sieben Dimensionen; und
    f) eine zeitverteilte Softmax-Schicht zur Vorhersage eines Zeichens für jeden Zeitschritt.

7. Ein System zum Analysieren und Clustern von Botnetzen, die einen gleichen Seed und einen Domän-Generierungsalgorithmus (DGA) mit eingebetteten DGA-Seed-Darstellungen, umfassend

    a) ein DGA-Klassifizierungsmodell zur Auswahl von DGA-generierten Domänennamen aus DNS-Einträgen; und
    b) mindestens einen Prozessor, der konfiguriert ist, um:

        i. die DGA-generierten Domänennamen als numerische Merkmalsvektoren darzustellen;
        ii. Einbettungen der ausgewählten Domänennamen zu lernen, indem ein neuronales Autoencoder-Netzwerk (NN) mit den ausgewählten Domänennamen trainiert wird, wobei der Autoencoder ein tiefer Konvolution-Autoencoder ist, der eine bidirektionale Langzeit-Kurzzeit-Einbettungsschicht in der Mitte hat, und wobei alle Autoencoder des neuronalen Netzwerks mit einer gleichen Eingangs- und Ausgangsschicht konfiguriert sind; und

iii. eine Clusteranalyse an den DGA-generierten Domänen durchzuführen, um eine DGA-Familienanalyse zu erhalten und zu bestimmen, ob eine erkannte DGA bösartig ist oder nicht, und um aktive Botnetze zu erkennen, die einen gleichen Seed teilen, indem nur der Domänenname unter Verwendung der Einbettungen untersucht wird,

und wobei der mindestens eine Prozessor zusätzlich konfiguriert ist, um:
iv. das Modell auf einen realen Datensatz aus einem DNS der oberen Ebene der DNS-Einträge anzuwenden, um zuvor unbekannte DGA-Familien zu erkennen und zwischen verschiedenen Domänen von einer gleichen DGA, die durch einen anderen Seed generiert wurden, zu unterscheiden.

8. System nach Anspruch 7, bei dem die Länge jeder nachfolgenden Kodierschicht um die Hälfte in ihrer Größe reduziert und jede Dekodierschicht entsprechend erhöht wird.

9. System nach Anspruch 7, bei dem der DGA-Klassifikator ein BiLSTM-Klassifikator ist, der aus zwei LSTMs aufgebaut ist, die jeweils einen gleichen Zeitschritt-Eingang haben und in entgegengesetzte Richtungen geschaltet sind, wobei der Ausgang eine Verkettung der beiden LSTM-Ausgänge ist.

10. System nach Anspruch 7, bei dem der Autoencoder eine Architektur aufweist, die eine Kombination von sowohl CharCNN als auch seq2seq-BiLSTM (CharCNN&BiLSTM) ist, bei der eine Netzwerk-Repräsentationsschicht eine Char-Einbettung ist oder bei der Kodierschichten aus CharCNN-Encodern bestehen, die die Eingabelänge reduzieren.

11. System nach Anspruch 7, bei dem der Autoencoder umfasst:

a) eine Char-Einbettungsschicht, die eine Rohdomäne auf eine Matrixlänge von acht mit einer Dimension von fünf kodiert;
b) eine CharCNN-Schicht mit zwei Filtern der Größe vier, drei Filtern der Größe drei und zwei Filtern der Größe zwei, die in ein Max-Pooling der Größe zwei eintreten;
c) einen ersten bidirektionalen LSTM-Encoder (biLSTM) zur Umwandlung jedes Zeitschritts in einen Codevektor der Größe drei;
d) einen zweiten biLSTM-Decoder zur Umwandlung eines wiederholten Codevektors in eine Sequenz der Größe vier mit drei Dimensionen;
e) eine Upsampling-Schicht und ein charCNN zur Umwandlung der Eingabe in eine ursprüngliche Länge mit sieben Dimensionen; und
f) eine zeitverteilte Softmax-Schicht zur Vorhersage eines Zeichens für jeden Zeitschritt.

## Revendications

1. Procédé exécuté par au moins un processeur pour analyser et regrouper des botnets qui partagent un même germe et des Algorithmes de génération de domaines (DGA) avec des représentations DGA intégrées, comprenant :

a) la sélection, par un modèle de classificateur DGA, de noms de domaine générés par DGA à partir d'enregistrements DNS ;
b) la représentation desdits noms de domaine générés par DGA comme vecteurs de caractéristiques numériques ;
c) l'apprentissage d'intégrations des noms de domaine sélectionnés par l'entraînement d'un réseau de neurones auto-encodeur (NN) avec lesdits noms de domaine sélectionnés, dans lequel ledit auto-encodeur est un auto-encodeur convolutif profond ayant au milieu une couche d'intégration bidirectionnelle à long terme et à court terme, et dans lequel tous les auto-encodeurs dudit réseau de neurones sont configurés avec une même couche d'entrée et de sortie ; et
d) l'exécution d'une analyse par regroupement sur lesdits noms de domaine générés par DGA pour obtenir une analyse de famille de DGA et déterminer si un DGA détecté est malveillant ou pas, et pour détecter des botnets actifs qui partagent un même germe en examinant uniquement le nom de domaine, en utilisant lesdites intégrations,

dans lequel ledit procédé comprend en outre une étape de :
e) application du modèle à un ensemble de données du monde réel à partir d'un DNS de niveau supérieur desdits enregistrements DNS pour détecter des familles précédemment inconnues de DGA et effectuer une distinction entre différents domaines à partir d'un même DGA qui ont été générés par un germe différent.

2. Procédé selon la revendication 1, dans lequel une longueur de chaque couche d'encodage ultérieure est coupée en deux, et chaque couche de décodage augmente en conséquence.

3. Procédé selon la revendication 1, dans lequel le classificateur DGA est un classificateur BiLSTM, construit avec deux LSTM, dont chacun partage une même entrée de pas de temps et sont connectés dans des sens opposés, où la sortie est une concaténation des deux sorties LSTM.

4. Procédé selon la revendication 1, dans lequel l'auto-encodeur est une combinaison à la fois de CharCNN et seq2seq-BiLSTM (CharCNN&BiLSTM).

5. Procédé selon la revendication 1, dans lequel une couche de représentation de réseau est une intégration Char ou dans lequel des couches d'encodage sont constituées d'encodeurs CharCNN qui réduisent une longueur d'entrée.

6. Procédé selon la revendication 1, dans lequel l'auto-encodeur comprend :

a) une couche d'intégration Char qui encode un domaine brut d'une matrice de longueur de huit avec une dimension de cinq ;
b) une couche CharCNN ayant deux filtres d'une taille de quatre, trois filtres d'une taille de trois, et deux filtres d'une taille de deux, entrant dans une mise en commun maximale d'une taille de deux ;
c) un premier encodeur bidirectionnel LSTM (biLSTM) pour transformer chaque pas de temps en un vecteur de code d'une taille de trois ;
d) un second décodeur biLSTM pour transformer un vecteur de code répété en une séquence d'une taille de quatre avec trois dimensions ;
e) une couche de suréchantillonnage et un charCNN pour transformer l'entrée en une longueur d'origine avec sept dimensions ; et
f) une couche softmax distribuée dans le temps pour prédire un caractère pour chaque pas de temps.

7. Système pour analyser et regrouper des botnets qui partagent un même germe et des Algorithmes de génération de domaines (DGA) avec des représentations DGA intégrées, comprenant :

a) un modèle de classificateur DGA pour sélectionner des noms de domaine générés par DGA à partir d'enregistrements DNS ; et
b) au moins un processeur, configuré pour :

i. représenter lesdits noms de domaine générés par DGA comme vecteurs de caractéristiques numériques ;
ii. apprendre des intégrations des noms de domaine sélectionnés par entraînement d'un réseau de neurones auto-encodeur (NN) avec lesdits noms de domaine sélectionnés, dans lequel ledit auto-encodeur est un auto-encodeur convolutif profond ayant au milieu une couche d'intégration bidirectionnelle à long terme et à court terme, et dans lequel tous les auto-encodeurs dudit réseau de neurones sont configurés avec une même couche d'entrée et de sortie ; et
iii. exécuter une analyse par regroupement sur lesdits domaines générés par DGA, pour obtenir une analyse de famille de DGA et déterminer si un DGA détecté est malveillant ou pas, et pour détecter des botnets actifs qui partagent un même germe en examinant uniquement le nom de domaine, en utilisant lesdites intégrations,

dans lequel ledit au moins un processeur est additionnellement configuré pour :
iv. appliquer le modèle à un ensemble de données du monde réel à partir d'un DNS de niveau supérieur desdits enregistrements DNS, pour détecter des familles précédemment inconnues de DGA et effectuer une distinction entre différents domaines à partir d'un même DGA qui ont été générés par un germe différent.

8. Système selon la revendication 7, dans lequel une longueur de chaque couche d'encodage ultérieure est coupée en deux, et chaque couche de décodage augmente en conséquence.

9. Système selon la revendication 7, dans lequel le classificateur DGA est un classificateur BiLSTM, construit avec deux LSTM, dont chacun partage une même entrée de pas de temps et sont connectés dans des sens opposés, où la sortie est une concaténation des deux sorties LSTM.

10. Système selon la revendication 7, dans lequel l'auto-encodeur présente une architecture qui est une combinaison à la fois de CharCNN et seq2seq-BiLSTM (CharCNN&BiLSTM), dans laquelle une couche de représentation de réseau est une intégration Char, ou dans laquelle les couches d'encodage sont constituées d'encodeurs CharCNN qui réduisent une longueur d'entrée.

11. Système selon la revendication 7, dans lequel l'auto-encodeur comprend :

a) une couche d'intégration Char qui encode un domaine brut d'une matrice de longueur de huit avec une dimension de cinq ;
b) une couche CharCNN ayant deux filtres d'une taille de quatre, trois filtres d'une taille de trois, et deux filtres d'une taille de deux, entrant dans une mise en commun maximale d'une taille de deux ;
c) un premier encodeur bidirectionnel LSTM (biLSTM) pour transformer chaque pas de temps en un vecteur de code d'une taille de trois ;
d) un second décodeur biLSTM pour transformer un vecteur de code répété en une séquence d'une taille de quatre avec trois dimensions ;
e) une couche de suréchantillonnage et un charCNN pour transformer l'entrée en une longueur d'origine avec sept dimensions ; et
f) une couche softmax distribuée dans le temps pour prédire un caractère pour chaque pas de temps.

Fig. 1

Fig. 2

Characters embedding

Convolutional layer
With multiple filters
of different sizes

*max*

Max pooling - size 2

Fig. 3

EP 3 614 645 B1

300

Fig. 4

Fig. 5

Fig. 6

| Family | Baseline Linguistic | | | Basic | | | CharCNN | | | Bin-CharCNN | | | Seq2Seq-LSTM | | | Seq2Seq-BiLSTM | | | CharCNN& BiLSTM | | |
|---|---|---|---|---|---|---|---|---|---|---|---|---|---|---|---|---|---|---|---|---|---|
| | F1 | Prec | Rec | F1 | Prec | Rec | F1 | Prec | Rec | F1 | Prec | Rec | F1 | Prec | Rec | F1 | Prec | Rec | F1 | Prec | Rec |
| *qadars* | 0 | 0 | 0 | **0.44** | **0.75** | 0.31 | 0.39 | 0.49 | **0.32** | 0.39 | 0.5 | **0.32** | 0.39 | 0.49 | **0.32** | 0 | 0 | 0 | 0 | 0 | 0 |
| *gameover* | 0.98 | 0.96 | **0.99** | 0.98 | 1 | 0.96 | **0.99** | 1 | 0.97 | 0.98 | 1 | 0.97 | 1 | 1 | 1 | 1 | 1 | 1 | 1 | 1 | 1 |
| *murofetweekly* | **0.97** | **0.95** | 1 | 0.72 | 0.85 | 0.62 | 0.62 | 0.62 | 0.62 | 0.62 | 0.62 | 0.62 | 0.78 | **0.96** | 0.65 | 0.84 | 0.73 | 1 | **0.97** | 0.94 | 1 |
| *dyre* | 0.78 | **0.97** | 0.65 | 0.48 | 0.41 | 0.6 | 0.55 | 0.65 | 0.48 | 0.55 | 0.65 | 0.48 | 0.47 | 0.49 | 0.46 | 0.74 | 0.87 | 0.65 | **0.8** | **0.97** | **0.68** |
| *virut* | 0 | 0 | 0 | 0 | 0 | 0 | 0 | 0 | 0 | 0 | 0 | 0 | 0 | 0 | 0 | 0 | 0 | 0 | **0.16** | **0.09** | **0.61** |
| *necurs* | 0.31 | 0.49 | 0.23 | 0 | 0 | 0 | **0.62** | **0.76** | **0.52** | **0.62** | **0.76** | **0.52** | **0.62** | **0.76** | **0.52** | 0 | 0 | 0 | 0.47 | **0.89** | 0.32 |
| *gameover_p2p* | 0.98 | **0.99** | 0.96 | 0.98 | 0.97 | 1 | **0.99** | 0.97 | 1 | 0.98 | 0.97 | 1 | 1 | **0.99** | 1 | 1 | 1 | 1 | 1 | 1 | 1 |
| *locky* | 0 | 0 | 0 | **0.19** | **0.13** | **0.35** | 0 | 0 | 0 | **0.19** | **0.13** | **0.35** | 0 | 0 | 0 | 0 | 0 | 0 | 0 | 0 | 0 |
| *cryptolocke* | 0.42 | **0.73** | 0.3 | 0.42 | 0.44 | 0.4 | 0.46 | 0.64 | 0.37 | 0.46 | 0.63 | 0.36 | 0.46 | 0.63 | 0.36 | **0.49** | 0.63 | **0.4** | 0.49 | 0.63 | 0.4 |
| *qakbot* | **0.92** | **0.85** | 1 | 0 | 0 | 0 | 0.46 | 0.51 | 0.42 | 0.56 | 0.68 | 0.48 | 0.69 | 0.76 | 0.62 | 0 | 0 | 0 | **0.92** | 0.86 | 1 |
| *murofet* | 0 | 0 | 0 | 0.17 | 0.11 | **0.37** | 0 | 0 | 0 | 0 | 0 | 0 | 0 | 0 | 0 | **0.29** | **0.28** | 0.3 | 0 | 0 | 0 |
| *ranbyus* | 0 | 0 | 0 | 0.55 | 0.72 | 0.45 | 0.55 | 0.72 | 0.44 | **0.64** | 0.72 | **0.57** | 0.58 | 0.72 | 0.49 | 0.45 | 1 | 0.29 | 0.51 | 0.72 | 0.39 |
| *suppobox* | **0.39** | **0.36** | 0.41 | 0.2 | 0.12 | **0.49** | 0 | 0 | 0 | 0 | 0 | 0 | 0 | 0 | 0 | 0 | 0 | 0 | 0 | 0 | 0 |
| *pushdo* | 0.26 | 0.49 | 0.18 | 0.43 | 1 | 0.27 | 0.48 | 0.73 | 0.36 | 0.5 | 0.69 | 0.39 | 0.57 | 0.87 | **0.43** | 0.41 | 1 | 0.26 | **0.59** | 1 | **0.42** |
| *tinba* | 0.54 | 0.67 | 0.45 | 0.92 | 1 | 0.86 | **0.99** | 1 | **0.98** | **0.99** | 1 | **0.98** | **0.99** | 1 | **0.98** | 0.92 | 1 | 0.86 | **0.99** | 1 | **0.98** |
| **Average** | 0.44 | 0.5 | 0.41 | 0.43 | 0.5 | 0.45 | 0.47 | 0.54 | 0.43 | 0.5 | 0.56 | 0.47 | 0.5 | 0.58 | 0.46 | 0.41 | 0.5 | 0.38 | **0.53** | **0.61** | **0.52** |
| **Top Rank** | 3 | 6 | 3 | 2 | 5 | 5 | 4 | 2 | 4 | 4 | 3 | 6 | 4 | 4 | 6 | 4 | 6 | 4 | 9 | 8 | 9 |

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MARTÍN ABADI ; ASHISH AGARWAL ; PAUL BARHAM ; EUGENE BREVDO ; ZHIFENG CHEN ; CRAIG CITRO ; GREG S. CORRADO ; ANDY DAVIS ; JE%REY DEAN ; MATTHIEU DEVIN.** *TensorFlow: Large-Scale Machine Learning on Heterogeneous Systems,* 2015, https://www.tensor#ow.org
- **AASHNA AHLUWALIA ; ISSA TRAORE ; KARIM GANAME ; NAINESH AGARWAL.** Detecting Broad Length Algorithmically Generated Domains. Lecture Notes in Computer Science (including subseries Lecture Notes in Arti"cial Intelligence and Lecture Notes in Bioinformatics). *10618 LNCS,* 2017, vol. 19, 34, https://doi.org/10. 1007/978-3-319-69155-8 {_}2
- **MANOS ANTONAKAKIS ; ROBERTO PERDISCI.** From throw-away traffic to bots: detecting the rise of DGA-based malware. *Proceedings of the 21st USENIX Security Symposium (2012),* 2012, 16, https://www.usenix.org/system/"les/conference/usenixsecurity12/sec12-"nal127.pdf
- **MANOS ANTONAKAKIS ; ROBERTO PERDISCI ; DAVID DAGON ; WENKE LEE ; NICK FEAMSTER.** Building a Dynamic Reputation System for DNS. *USENIX Security'10: Proceedings of the 19th USENIX conference on Security (2010),* 2010, 1-17, https://doi.org/10.1145/2584679
- **ALEJANDRO CORREA BAHNSEN ; EDUARDO CONTRERAS BOHORQUEZ ; SERGIO VILLEGAS ; JAVIER VARGAS ; FABIO A. GONZALEZ.** Classifying phishing URLs using recurrent neural networks. *eCrime Researchers Summit, eCrime (2017),* 2017, 1-8, https://doi.org/10.1109/ECRIME.2017.7945048
- **YONATAN BELINKOV ; JAMES GLASS.** *A Character-level Convolutional Neural Network for Distinguishing Similar Languages and Dialects,* 2016, https://doi.org/10.1088/1751-8121/aa5bc1
- **PAVOL BIELIK ; VESELIN RAYCHEV ; MARTIN VECHEV.** *Character Level Based Detection of Dga Domain Names,* 2017, vol. 2017, 1-17
- **LEYLA BILGE.** *E XPOSURE : a Passive DNS Analysis Service to Detect and Report Malicious Domains,* 2011, vol. 4
- **H. BINSALLEEH ; T. ORMEROD ; A. BOUKHTOUTA ; P. SINHA ; A. YOUSSEF ; M. DEBBABI ; L. WANG.** On the analysis of the Zeus botnet crimeware toolkit. *PST 2010: 2010 8th International Conference on Privacy, Security and Trust,* 2010, 31-38, https://doi.org/10.1109/PST.2010.5593240
- **FRANÇOIS CHOLLET et al.** *Keras,* 2015, https://github.com/fchollet/keras
- **HOWARD B. DEMUTH ; MARK H. BEALE ; ORLANDO DE JESS ; MARTIN T. HAGAN.** Neural Network Design. 2014
- **JEGA ANISH DEV.** Bitcoin mining acceleration and performance quantification. *Canadian Conference on Electrical and Computer Engineering (2014),* 2014, 1-6, https://doi.org/10.1109/CCECE.2014.6900989
- **BHUWAN DHINGRA ; ZHONG ZHOU ; DYLAN FITZPATRICK ; MICHAEL MUEHL ; WILLIAMW. COHEN.** *Tweet2Vec: Character-Based Distributed Representations for Social Media. (2016),* 2016, https://doi.org/10.18653/vl/P16-2044
- **CATHERINE EVERETT.** The lucrative world of cyber-espionage. *Computer Fraud and Security,* 2009, vol. 7, 5-7, https://doi.org/10.1016/S1361-3723(09)70084-3
- **NAZRUL HOQUE ; DHRUBA K. BHATTACHARYYA ; JUGAL K. KALITA ; BHOQUE, N. ; BHATTACHARYYA, D. K. ; KALITA, J. K.** Botnet in DDoS Attacks: Trends and Challenges. *IEEE Communications Surveys and Tutorials,* 2015, vol. 17 (4), 2242
- DDoS Attacks: Trends and Challenges. *IEEE Communications Surveys and Tutorials,* 2015, vol. 17 (4), 2242-2270, http://doi.org/10.1109/COMST.2015.2457491otnet
- Extreme learning machine: a new learning scheme of feedforward neural networks. **GUANG-BIN HUANG ; QIN-YU ZHU ; CHEE-KHEONG SIEW.** IEEE International Joint Conference. IEEE, 2004, vol. 2, 985-990
- **T JAYALAKSHMI ; SANTHAKUMARAN A.** *Statistical normalization and back propagation for classi"cation,* January 2011, vol. 3, 89-93

- **YOON KIM ; YACINE JERNITE ; DAVID SONTAG ; ALEXANDER M. RUSH.** *Character-Aware Neural Language Models. (2015),* 2015, https://doi.org/2
- **HUNG LE ; QUANG PHAM ; DOYEN SAHOO ; STEVEN C. H. HOI.** *URLNet: Learning a URL Representation with Deep Learning for Malicious URL Detection,* 2018, http://arxiv.org/abs/1802.03162
- **YANN LECUN ; YOSHUA BENGIO ; GEO%REY HINTON.** Deep learning. *Nature,* 2015, vol. 521 (7553), 436-444, https://doi.org/10.1038/naturel4539
- **BAOJUN LIU ; CHAOYI LU ; ZHOU LI ; YING LIU ; HAIXIN DUAN ; SHUANG HAO ; ZAIFENG ZHANG.** *A Reexamination of Internationalized Domain Names : the Good , the Bad and the Ugly. ([n. d.)*
- **X LUO, LWANG ; Z XU ; J YANG,MSUN ; JWANG.** DGASensor: Fast detection for DGA-based malwares. *ACM International Conference Proceeding Series Part F1280 (2017),* 2017, 47-53, https://doi.org/10.1145/3057109.3057112
- **HIEU MAC ; DUC TRAN ; VAN TONG ; LINH GIANG NGUYEN ; HAI ANH TRAN.** DGA Botnet Detection Using Supervised Learning Methods. *Proceedings of the Eighth International Symposium on Information and Communication Technology (2017),* 2017, 211-218, https://doi.org/10.1145/3155133.3155166
- **MIRANDA MOWBRAY ; JOSIAH HAGEN.** Finding domain-generation algorithms by looking at length distribution. *Proceedings - IEEE 25th International Symposium on Software Reliability Engineering Workshops, ISSREW 2014,* 2014, 395-400, https://doi.org/10.1109/ISSREW.2014.20
- **DANIEL PLOHMANN ; KHALED YAKDAN ; MICHAEL KLATT ; ELMAR GERHARDS-PADILLA.** A Comprehensive Measurement Study of Domain Generating Malware. *Proceedings of the 25th USENIX Security Symposium (2016),* 2016, https://www.usenix. org/conference/usenixsecurityl6/technical-sessions/presentation/plohmann
- **JOSHUA SAXE ; KONSTANTIN BERLIN.** *eXpose: A Character-Level Convolutional Neural Network with Embeddings For Detecting Malicious URLs, File Paths and Registry Keys. (2017),* 2017, http://arxiv.org/abs/1702.08568
- **STEFANO SCHIAVONI ; FEDERICO MAGGI ; LORENZO CAVALLARO ; STEFANO ZANERO.** Phoenix: DGA-based botnet tracking and intelligence. *Lecture Notes in Computer Science (including subseries Lecture Notes in Arti''cial Intelligence and Lecture Notes in Bioinformatics) 8550 LNCS,* 2014, 192-211, https://doi.org/10.1007/978-3-319-08509-8{_}11
- **MIKE SCHUSTER ; KULDIP K. PALIWAL.** Bidirectional recurrent neural networks. *IEEE Transactions on Signal Processing,* 1997, vol. 45 (11), 2673-2681, https://doi.org/10.1109/78.650093
- **SUVRIT SRA ; SEBASTIAN NOWOZIN ; STEPHEN J WRIGHT.** Optimization for machine learning. Mit Press, 2012
- **VAN TONG ; GIANG NGUYEN.** A method for detecting DGA botnet based on semantic and cluster analysis. *Proceedings of the Seventh Symposium on Information and Communication Technology - SoICT,* 2016, vol. 16, 272-277, https://doi.org/10.1145/3011077.3011112
- **DUC TRAN ; HIEU MAC ; VAN TONG ; HAI ANH TRAN ; LINH GIANG NGUYEN.** A LSTM based framework for handling multiclass imbalance in DGA botnet detection. *Neurocomputing,* 2018, vol. 275, 2401-2413, https://doi.org/10.1016/j. neucom.2017.11.018
- **TZY SHIAH WANG ; HUI TANG LIN ; WEI TSUNG CHENG ; CHANG YU CHEN.** DBod: Clustering and detecting DGA-based botnets using DNS tra!c analysis. *Computers and Security,* 2017, vol. 64, 1-15, https://doi.org/10.1016/j.cose.2016.10.001
- **JONATHAN WOODBRIDGE ; HYRUM S. ANDERSON ; ANJUM AHUJA ; DANIEL GRANT.** *Predicting Domain Generation Algorithms with Long Short-Term Memory Networks. (2016),* 2016, http://arxiv.org/abs/1611.00791
- **JONATHAN WOODBRIDGE ; HYRUM S. ANDERSON ; ANJUM AHUJA ; DANIEL GRANT.** *Predicting Domain Generation Algorithms with Long Short-Term Memory Networks,* 2016, http://arxiv.org/abs/1611.00791
- **YIJUN XIAO ; KYUNGHYUN CHO.** *Efficient Character-level Document Classi''cation by Combining Convolution and Recurrent Layers,* 2016, http: //arxiv.org/abs/1602.00367
- **BIN YU ; DANIEL L. GRAY ; JIE PAN ; MARTINE DE COCK ; ANDERSON C.A. NASCIMENTO.** Inline DGA detection with deep networks. *IEEE International Conference on Data Mining Workshops, ICDMW 2017-Novem (2017),* 2017, 683-692, https://doi. org/10.1109/ICDMW.2017.96
- **MATEI ZAHARIA ; MICHAEL J. FRANKLIN ; ALI GHODSI ; JOSEPH GONZALEZ ; SCOTT SHENKER ; ION STOICA ; REYNOLD S. XIN ; PATRICK WENDELL ; TATHAGATA DAS ; MICHAEL ARMBRUST.** Apache Spark: a uni''ed engine for big data processing. *Commun. ACM,* 2016, vol. 59 (11), 56-65, https://doi.org/10.1145/2934664
- **HAN ZHANG.** *BotDigger: Detecting DGA Bots in a Single Network. Tma (2016),* 2016
- **XIANG ZHANG ; YANN LECUN.** *Byte-Level Recursive Convolutional Auto- Encoder for Text. (2018),* 2018, http://arxiv.org/abs/1802.01817